# EUROPEAN PATENT APPLICATION

(11) **EP 2 746 885 A1**
(43) Date of publication of application: **25.06.2014**
(21) Application number: 12382511.9
(22) Date of filing: 18.12.2012
(51) Int. Cl.: G05B 23/02, F03D 11/00

(54) **Method of monitoring the condition of a wind turbine**

(71) Applicant: Alstom Wind, S.L.U., 08005 Barcelona (ES)
(72) Inventor: Menasanch de Tobaruela, Jorge, 19171 Cabanillas del Campo (ES)
(74) Representative: ZBM Patents - Zea, Barlocci & Markvardsen

(57) **Abstract**

Method of monitoring the condition of a wind turbine, comprising the steps of:
- selecting a plurality of measurable parameters indicative of the operational state of the wind turbine;
- recording measures of a variable indicative of the condition of the wind turbine during a period of normal operation thereof, and deriving corresponding values of a characteristic quantity from said measures;
- recording measures of the parameters during the same period;
- identifying a correlation between the characteristic quantity and at least one parameter, based on said data;
- from said correlation, defining the expected value of the characteristic quantity as a target function that is a function of said at least one correlated parameter.

## Description

The present invention is related to a method of monitoring the condition of a wind turbine comprising the steps of recording measures of a variable indicative of the condition of the wind turbine during a period of normal operation thereof, and deriving corresponding values of a characteristic quantity from said measures.

The "condition" of the wind turbine refers to the mechanical condition thereof, as explained below.

The "characteristic quantity" derived from the measured variable is a magnitude that is useful for analyzing the behaviour of the variable.

### BACKGROUND ART

Modern wind turbines are commonly used to supply electricity into the electrical grid. Wind turbines of this kind generally comprise a rotor with a plurality of blades. The rotor is set into rotation under the influence of the wind on the blades. The rotation of the rotor shaft drives the rotor of an electric generator either directly or through the use of a gearbox. In the latter case, the shaft of the rotor of the electric generator rotates faster than the shaft of the rotor of the wind turbine; the latter is known as primary or low-speed shaft, whereas the former is known as secondary or high-speed shaft.

With the pass of time the mechanical elements of the wind turbine are subjected to wear and attrition. This can result in increasing (and damaging) vibrations, so that by measuring said vibrations the wind turbine status can be determined. Other phenomena, such as, but not limited to, misalignment of components, loosening of parts or ice accretion on the blades, can also lead to abnormally high vibrations.

One common way of measuring said vibration is by placing accelerometers at sensitive locations of the wind turbine, for example on the high-speed shaft. An accelerometer can measure the acceleration of an oscillating movement, e.g. a vibration; said acceleration can be integrated to produce a speed, and said speed can be integrated to produce a displacement. Alternatively, speed or position sensors may also be employed to take measures of an oscillating movement.

Condition Monitoring is a procedure used in machine maintenance that provides information on what the condition of a mechanical element is. Condition monitoring can also predict an impending failure within the system. Condition monitoring can either be used to enhance safety or to make the current level of safety more affordable. One way of monitoring the condition of an element is to directly watch the vibration level of said element or, alternatively, to watch the vibration of a second element whose vibration level is affected by the condition of said first element. As the condition of a mechanical element depends on its time of operation, the vibration is usually sensed either continually or periodically during the lifetime of said mechanical element. By properly identifying variations on the measured vibration levels, the status of the element can be determined.

A plurality of techniques may be used to analyse vibration signals. In some cases, vibration signals can be simply filtered and their root mean square, RMS, evaluated. Alternatively, in other cases, an envelope detector may be used when the features of the envelope are more relevant than the behaviour of the vibration signal itself. Furthermore, one common way of analyzing vibration signals is the use of the Fast Fourier Transform (FFT) for spectral analysis. A FFT analyzer identifies and quantifies the frequency components of a vibration signal, i.e. the harmonic frequencies. The FFT analyzer provides a graph (spectrum) of the amplitude (the amplitude of an acceleration, a speed or a displacement) as a function of the frequency. If abnormally high peaks are detected at specific frequencies, then each of said specific frequencies (indicative of characteristic vibration components) indicates a mechanical issue and, perhaps, a problem that warns of a damaged element.

The rotational speed of the rotor of the wind turbine, and hence of the low speed shaft, varies depending on the wind speed when variable speed wind turbines are used. In such a case, when the rotational speed changes, the peak positions also change, so that it is difficult to assign the position of the peaks to any specific condition. To overcome these drawbacks, an ordered FFT analysis can be performed on the vibration signal.

Order analysis enables to analyze vibration signals when the rotational speed varies over time. An order is the normalization of the rotational speed. The first order is the frequency of the rotational speed, or rotational frequency, and order "n" is n times the rotational frequency. Order components are thus the harmonics of the rotational speed. The ordered FFT analysis normalizes the measurements to the rotational speed of each measurement, so that the measured vibration is expressed as multiples of the rotational frequency. In this way, the vibration data may be compared in terms of a constant rotational speed. Witch changing rotational speed, the ordered FFT spectrum is more likely to reveal the peaks that indicate the specific frequencies.

If a fixed speed wind turbine is monitored, a standard FFT analysis can be applied, and there is no need of an ordered FFT.

However, there are situations in which it is still hard to detect any specific frequency even with ordered FFT analysis. This may be because the monitored vibration can depend on other operational parameters apart from the rotational speed of the wind turbine, like power, wind speed or ambient temperature, to name only a few. Thus, unlike simple mechanical devices, whose condition can be properly determined by sensing the time evolution of a simple vibration, wind turbines operate under a wide range of operating conditions, so that vibration levels regarded as abnormally high under certain conditions (i.e. certain wind speed) might fall within the range of acceptable vibrations for other conditions. Consequently, varying operating conditions can lead to a very wide range on the measured vibration levels, so that said vibration level by itself is not enough to clearly characterize the status of the wind turbine.

US8162788 discloses that "a wind turbine may be controlled based on operating parameters such as vibration levels at various levels of power output. Such operating parameters are often provided by sensors of the wind turbine. However, known sensors can produce such a large volume of data that extracting useful information from the sensor data may be difficult". US8162788 then discloses "a method for operating a wind turbine based on operating profiles for the wind turbine corresponding to operating modes. The method includes defining operating modes and acquiring a plurality of parameter values, each based on a reading from a sensor of the wind turbine.

Each of the parameter values is associated with one of the operating modes to create a wind turbine operating profile for each mode. The wind turbine is controlled based on the operating profiles (...) The method includes defining a plurality of operating modes, each of which corresponds to a range of power output for the wind turbine".

In any case, US8162788 does not teach anything about the underlying causes of problematic vibration levels, nor does it provide any indication on how to optimize the operating profiles based on those measured parameter values to achieve improved sensitivity and reliability.

### SUMMARY

The present disclosure teaches ways to overcome or mitigate the problems outlined above.

The present disclosure contemplates that a method of monitoring the condition of a wind turbine may comprise the steps of:
- selecting a plurality of measurable parameters indicative of the operational state of the wind turbine;
- recording measures of a variable indicative of the condition of the wind turbine during a period of normal operation of the wind turbine and deriving corresponding values of a characteristic quantity from said measures;
- recording measures of the parameters during the same period;
- identifying a correlation between the characteristic quantity and at least one parameter, based on said data;
- from said correlation, defining the expected value of the characteristic quantity as a target function that is a function of said at least one correlated parameter.

The measures of the variable and the parameters may be taken coordinately, for example at substantially the same moments. "A period of normal operation of the wind turbine" refers to a period of time during which the value of the variable is always within an acceptable range. The period of normal operation can be unitary or can be a set of separate sub-periods.

As mentioned, the "characteristic quantity" derived from the measured variable is a magnitude that is useful for analyzing the behaviour of the variable. For example, the characteristic quantity can be the mean of the variable within a predetermined range of frequencies, the height of a specific peak that results from applying a spectral analysis to the measured variable, etc. The characteristic quantity can also be the variable itself.

This method is advantageous in that it does not require any prior knowledge of the correlation between the parameters and the characteristic quantity. Conversely, said correlation is established as part of the method, so that those parameters exhibiting the highest correlation with the characteristic quantity, perhaps unexpectedly, can be identified and employed during further monitoring of the wind turbine.

It may happen that a good enough correlation cannot be identified, meaning that the found correlation/s are not very accurate, in which case the usefulness of said method would be limited. The more operational parameters are selected, the likelier it is to identify a good correlation. Furthermore, it is possible to find a correlation between the characteristic quantity and two or more parameters. The target function gives the expected (normal) value of the characteristic quantity that corresponds to the measured value of the correlated parameter/s. The target function allows monitoring the characteristic quantity by measuring it together with the most clearly correlated parameter/s, thus increasing the overall sensitivity of the monitoring system.

The sensitivity of the method depends on the degree of correlation. The higher the correlation between the characteristic quantity and one or more parameters, the more sensitive the method is, meaning that a relatively small deviation from the expected value of the characteristic quantity would indicate a problem. Furthermore, once the correlation is established, only the most correlated parameter/s need to be monitored, together with the characteristic quantity.

The recording step may comprise recording a time series of the variable, determining a corresponding time series of the characteristic quantity, and recording a corresponding time series of the parameters, and the method may further comprise the steps of:
- defining a normalized time series of the characteristic quantity as a time function that is a function of the characteristic quantity as represented by the time series of the characteristic quantity, and is also a function of the target function as applied to the corresponding time series of the at least one correlated parameter;
- defining an alarm function which is a function of said time function.

The time function will usually give a relative value of the characteristic quantity with respect to the expected value of the characteristic quantity, like for instance the ratio, the difference or the relative difference between the determined characteristic quantity and the expected value of the characteristic quantity given by the target function.

The alarm function can give, either directly or indirectly and for each relative value in the normalized time series of the characteristic quantity, a threshold value that the characteristic quantity should not exceed. The alarm function can be a constant, i.e., can be the same number for every value of the characteristic quantity.

All the functions involved (target function, time function, alarm function, etc) may be analytic, or may be represented by a graph or a table or may be defined in any other way. When a function is not defined analytically, interpolation may be necessary.

For example, the time function may be represented with a histogram and may thus be approximated by a probability distribution, preferably, when suitable, by a normal probability distribution. In any case, the alarm function may thus be a constant equal to the mean plus the standard deviation of said probability distribution. An alarm can then be triggered when, for example, the characteristic quantity differs from the value given by the time function in more than a certain number of standard deviations.

The better the correlation between the characteristic quantity and the correlated parameter/s is, the lower said standard deviation is and the more sensitive the method is, as pointed out above.

The method may further comprise the steps of:
- measuring the variable and determining the corresponding characteristic quantity;
- measuring the at least one correlated parameter;
- applying the target function to said measure of the at least one correlated parameter to obtain an expected value of the characteristic quantity;
- applying the time function to said characteristic quantity and said expected value thereof;
- applying the alarm function to the previous result of the time function;
- computing the difference between the previous results of the time function and the alarm function;
- triggering a first alarm if said difference is bigger than a first predetermined amount.

These steps are performed more or less regularly, after having completed the steps previously described, and constitute the actual control of the wind turbine derived from the monitoring of the characteristic quantity.

The method may also comprise the step of triggering a second alarm if said difference is bigger than a second predetermined amount. The first alarm may be a warning and may be triggered when said difference is bigger than, for example, four standard deviations. The second alarm may be an emergency call and may be triggered when said difference is bigger than, for example, seven standard deviations.

Actually, as many additional triggering steps as desired can be defined to account for varying deviations between the value obtained for the characteristic quantity and the corresponding expected value.

The recording step may further comprise selecting a range for the rotational speed of the rotor of the wind turbine and performing the measurements within said range. This range can be selected as characteristic of the malfunctioning that is represented by the excessive values of the variable.

The monitored variable may be any of the amplitude, speed or acceleration of a vibration of an element of the wind turbine. The frequency of said vibration may be filtered by a predetermined range of frequencies, i.e., only the frequencies within said range may be considered. This is because it may be known that certain defects are especially troublesome within said range.

The parameters may be selected, for instance, from the rotational speed of the rotor of the wind turbine, the power output, the rotational speed of the high-speed shaft, the ambient temperature, the wind speed, the atmospheric pressure, the humidity level, the corrosion of the surface of the blades, or any parameter that might influence the behaviour of the monitored variable.

The identification of the correlation (or correlations) between the monitored variable and the measured parameters can be performed with a plurality of techniques. The selected technique may depend, for instance, on whether a single or a plurality of parameters is considered for one correlation. In the former case, minimum mean squared error methods might be used. In the latter case, self-learning algorithms, such as those involving neural networks might be employed.

### BRIEF DESCRIPTION OF THE DRAWINGS

Some particular embodiments of the present invention will be described in the following, only by way of non-limiting example, with reference to the appended drawings, in which:
figure 1 is a graph of an spectrum;
figure 2 is an enlargement of a portion of the graph of figure 1;
figure 3 is a graph of a time series;
figure 4 is a histogram of the time series of figure 1;
figure 5 is a graph of a variable plotted against a parameter;
figure 6 is an enlargement of a portion of the graph of figure 3;
figure 7 is a graph of a time series;
figure 8 is a histogram of the time series of figure 5;
figure 9 is a graph of a time series;
figure 10 is a histogram of the time series of figure 7;
figure 11 is a graph of a variable plotted against a parameter;
figure 12 is an enlargement of a portion of the graph of figure 9;
figure 13 is a graph of a time series; and
figure 14 is a histogram of the time series of figure 11.

### DESCRIPTION OF PARTICULAR EMBODIMENTS

A wind turbine with gearbox and variable pitch is considered. Some accelerometers are installed in the wind turbine. In particular, a vertical accelerometer is placed on the high-speed shaft. Hence, the monitored magnitude is the vertical vibration of the high-speed shaft; in the following examples, the chosen variable is the vertical acceleration of the high-speed shaft. From said variable, a characteristic quantity is derived to monitor condition of the wind turbine.

For the sake of simplicity, only one parameter is chosen to correlate with said characteristic quantity, namely the rotational speed of the high-speed shaft. Nevertheless, in a real-life condition monitoring under the present disclosure, at least another parameter could be selected in order to explore more than one correlation, like for instance the power output or the wind speed, and preferably several parameters would be recorded together with the variable because it is not known "a priori" which correlations might exist or might be better. If a plurality of parameters is recorded, the method shown below can be performed individually for each of parameter. Alternatively, multivariable strategies can be employed (e.g. a neural network) to identify correlations between the characteristic variable and one or more of said parameters.

What was measured in the following examples was the parameter "P" (rotational speed of the high-speed shaft) and the variable "V" (vertical acceleration of the high-speed shaft). P is given in rpm (revolutions per minute) and V is given in mm/s². The measures were taken during several months.

### Example 1

The measures can be taken with the wind turbine operating under any condition or under certain pre-determined conditions. In the latter case, identification of potential correlations is facilitated by limiting the range of available values for both the measured variable and the parameter(s). Said pre-determined conditions will of course vary as a function of the technical specifications of the monitored wind turbine (power, rotational speed, size). In any case, the definition of these pre-determined conditions is not a requirement and the disclosed method can be also carried out when measurements are taken over the complete operating range.

In this example, the use of certain pre-determined conditions was preferred. In particular, the following ranges were selected:
- a rotational speed P of the high-speed shaft between 1000 and 2000 rpm;
- an electrical power in the range of 180 to 600 KW.

Acquired data must be processed, so that a characteristic quantity "CQ" can be derived from measured variable values. In this example, the following steps are used to obtain such a characteristic quantity from the initially measured variable (i.e. vertical acceleration of the high speed shaft):
- integration of the measured variable to calculate vertical speed of the high speed shaft (given in mm/s);
- ordered FFT analysis to obtain the spectrum of the calculated vertical speed of the high speed shaft;
- band-pass filter to limit analysis to the spectral band between 0.8 and 1.2 orders;
- measurement of the peak value of said band (alternatively, the RMS value of said band might be used).

After said process, the evaluated peak value corresponds in this example to the characteristic quantity related to the measured variable.

The use of a spectral band between 0.8 and 1.2 orders is not arbitrary, but based on previous knowledge. In particular, said band is characteristic of, among others, the possible misalignment of the coupling of the high-speed shaft with the rotor of the generator;

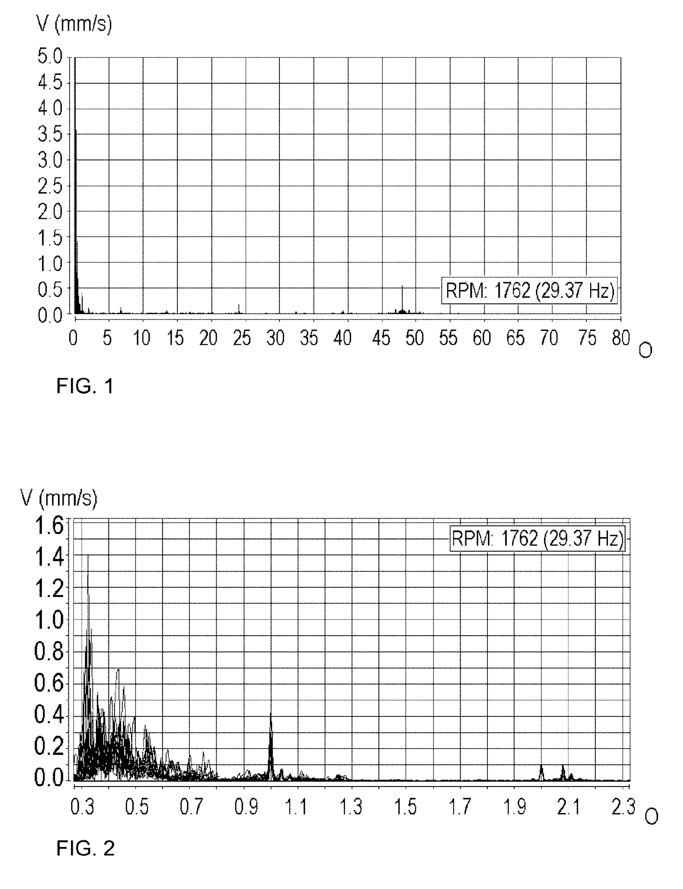

Figure 1 shows the result of an ordered spectral analysis, over a range of 0-80 orders, for the vertical speed of the high speed shaft when P=1762 rpm, and figure 2 shows an enlargement of figure 1 in the range 0.3-2.3 orders. It can be seen that notorious peaks exist for O = 0.32, 1, 2 and 2.08, among others. By using a band-pass filter, the peak located at O = 1 can be chosen. Thus, the height of this peak, which is identified as the characteristic quantity CQ in this example, is obtained.

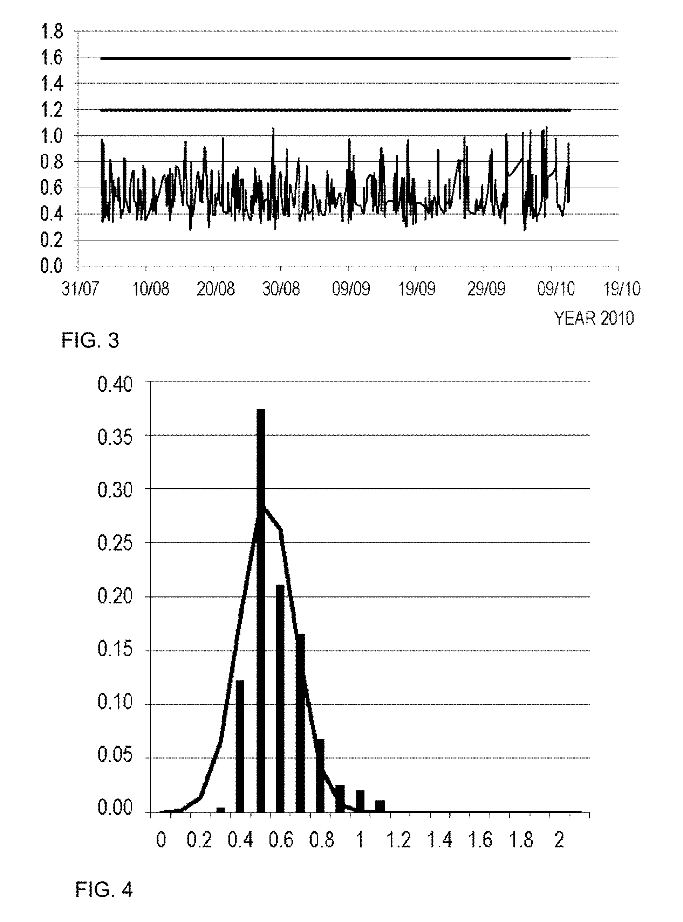

Figure 3 represents a time series of CQ over two months, and figure 4 shows a histogram made from the data of figure 3 and a normal probability distribution that approximates said histogram. The abscissa axis of fig. 4 corresponds to the ordinate axis of fig. 3. It can be seen that the mean value of CQ in the time series is approximately 0.6 mm/s; when computed, the standard deviation turns out to be approximately 0.12.

The lower highlighted horizontal line in fig. 3 is the mean plus five standard deviations, and the higher highlighted horizontal line in fig. 3 is the mean plus eight standard deviations. A first alarm, or warning, can be triggered if, for instance, CQ is bigger than the mean plus five standard deviations, and a second alarm, or emergency, can be triggered if, for instance, CQ is bigger than the mean plus eight standard deviations.

The example just described above follows, so far, a known procedure. The method contemplated in the present disclosure will be presently described.

The studied spectral band (0.8-1.2 orders) is characteristic of some aspects of the state of the wind turbine, like the state of the surfaces of the bearings or the gears, possible looseness, misalignments, imbalances, dynamic behaviour of the structure, etc.

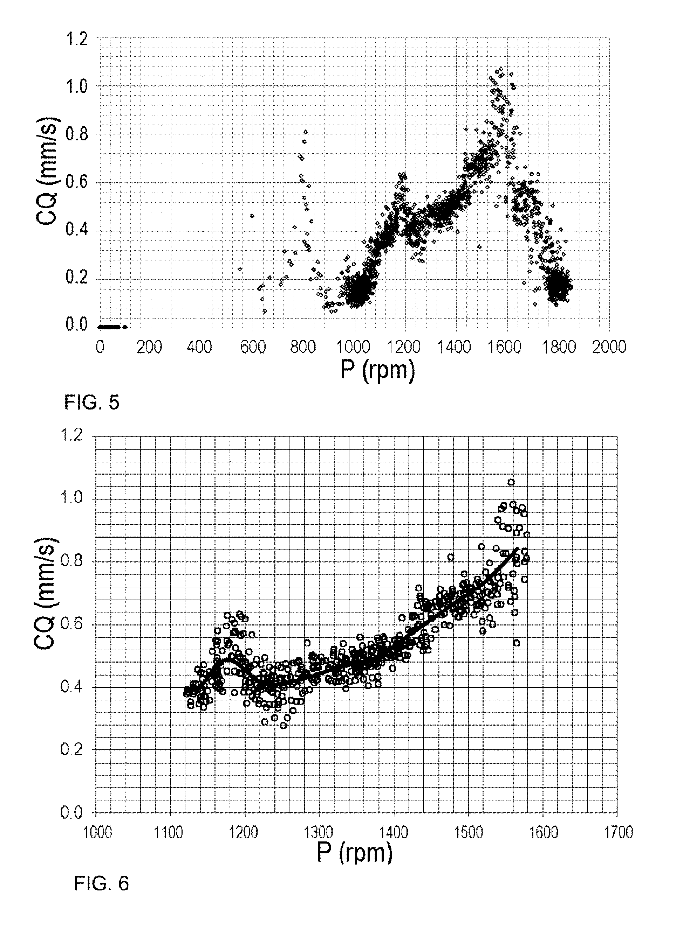

Figure 5 shows a cloud of measurements of the pair (P, CQ), and figure 6 shows an enlargement of fig. 5 in the range 1100-1600 rpm, which approximately corresponds to the range 0.8-1.2 orders. Figure 6 also shows a curve that approximately fits the cloud of points. Said curve defines a correlation between CQ and P and can be obtained through different techniques of regression analysis, like, for example, aggregating bins of data and interpolating with cubic splines. The found correlation is called "target function" and provides an expected value of CQ for any value of P in the considered range.

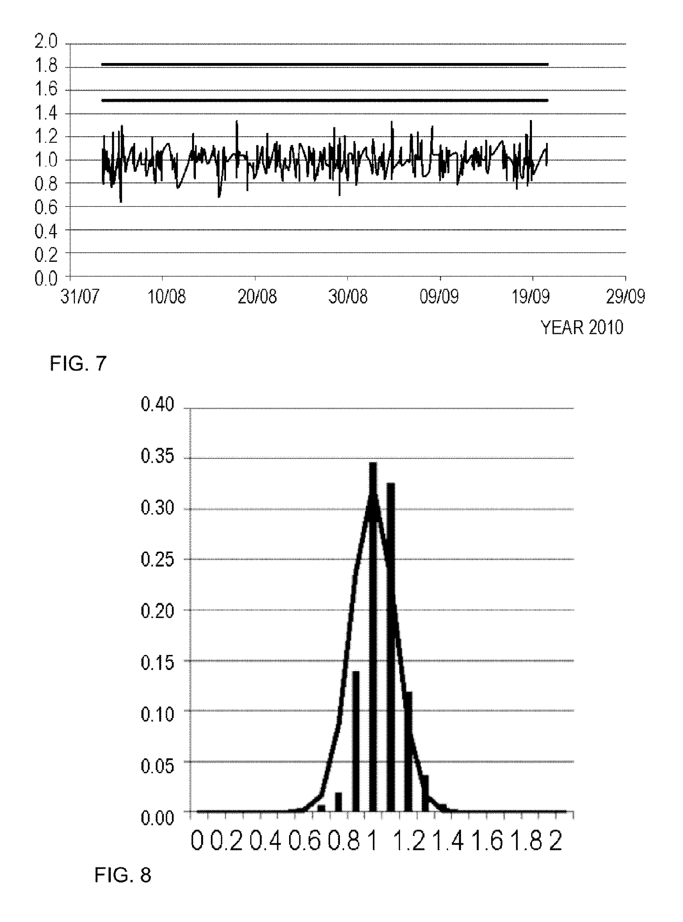

The next step is to normalize the variable CQ by, in this case, taking the quotient between the derived value of CQ (obtained after processing of the measured variable, V) and the expected value of CQ, the latter obtained by virtue of the correlation found between CQ and P. That is, to the derived value of CQ corresponds a measured value of P, and from the latter an expected value of CQ is obtained; let's call CQ' said expected value of CQ. Then the normalized value of CQ is CQ/CQ', which can be called CQ". Instead of the quotient, the difference or the relative difference between CQ and CQ' could be taken. This normalization is called "time function" and transforms a time series of CQ into a time series of CQ". The latter is represented in figure 7, in which the abscissa axis is the time and the ordinate axis is CQ".

Figure 8 shows a histogram made from the data of figure 7 and a normal probability distribution that approximates said histogram. The abscissa axis of fig. 8 corresponds to the ordinate axis of fig. 7. It can be seen that the mean value of CQ" in the time series is approximately 1; when computed, the standard deviation turns out to be approximately 0.1, that is, relative to the mean the standard deviation is half what it was in the previously described known procedure.

The lower highlighted horizontal line in fig. 7 is the mean plus five standard deviations, and the higher highlighted horizontal line in fig. 7 is the mean plus eight standard deviations. A first alarm, or warning, can be triggered if, for instance, CQ" is bigger than the mean plus five standard deviations, and a second alarm, or emergency, can be triggered if, for instance, CQ" is bigger than the mean plus eight standard deviations.

This method is more sensitive than the known procedure because the standard deviation is smaller.

### Example 2

Again, the measures are taken within a certain operating range. In this case, the wind turbine operates within the following conditions:
- a rotational speed P of the high-speed shaft between 600 and 1800 rpm;
- an electrical power in the range of 200 to 600 KW.

The same variable, V, is used (i.e. vertical acceleration of the high speed shaft) and an equivalent process is used to determine the characteristic quantity, CQ. In this case, a spectral band between 1.8 and 2.2 orders, which is characteristic of, among others, possible faults at the bearing of the high-speed shaft, is selected.

As before, a known procedure will be described first.

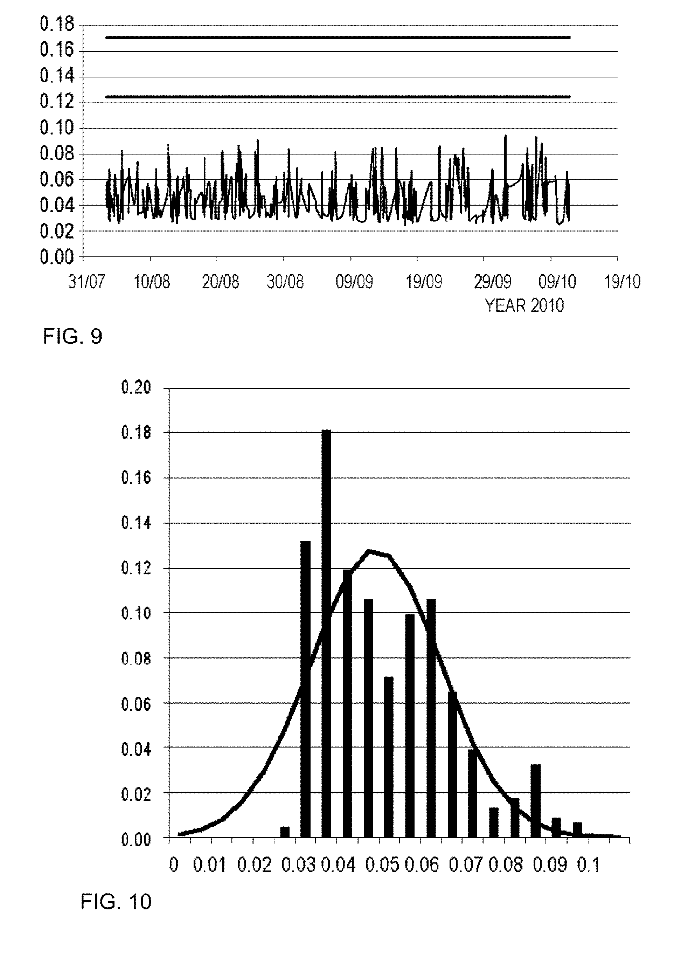

Figure 9 represents a time series of CQ over two months, and figure 10 shows a histogram made from the data of figure 9 and a normal probability distribution that approximates said histogram. The abscissa axis of fig. 10 corresponds to the ordinate axis of fig. 9. It can be seen that the mean value of CQ in the time series is approximately 0.05 mm/s; when computed, the standard deviation turns out to be approximately 0.015.

The lower highlighted horizontal line in fig. 9 is the mean plus five standard deviations, and the higher highlighted horizontal line in fig. 9 is the mean plus eight standard deviations. A first alarm, or warning, can be triggered if, for instance, CQ is bigger than the mean plus five standard deviations, and a second alarm, or emergency, can be triggered if, for instance, CQ is bigger than the mean plus eight standard deviations.

The example just described above follows, as mentioned, a known procedure. The method contemplated in the present disclosure will be presently described.

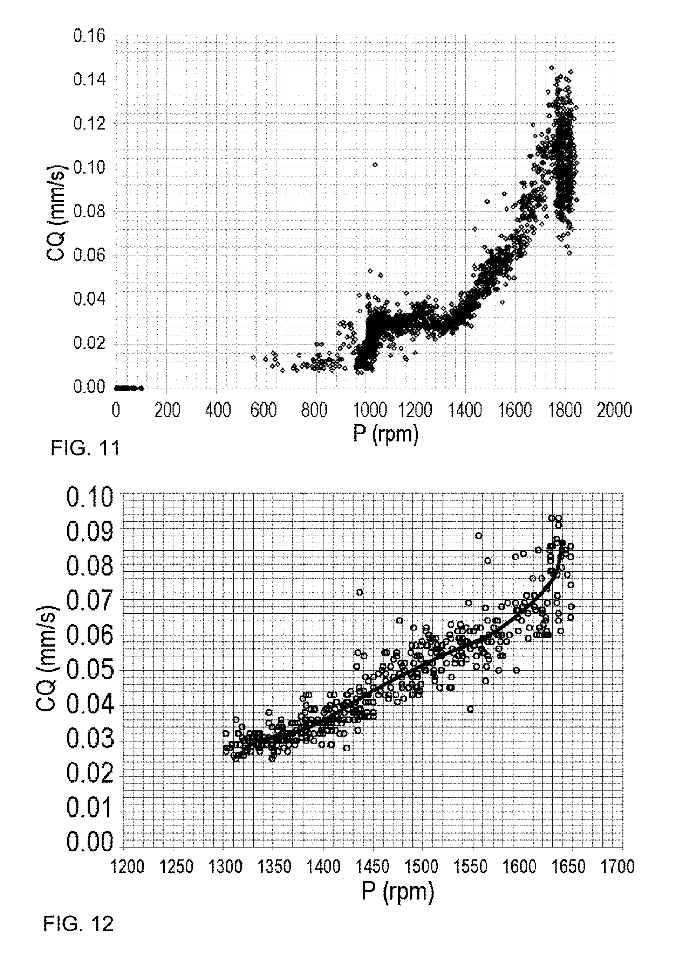

Figure 11 shows a cloud of measurements of the pair (P, CQ), and figure 12 shows an enlargement of fig. 11 in the range 1350-1650 rpm, which corresponds to the range 1.8-2.2 orders. Figure 12 also shows a curve that approximately fits the cloud of points. Said curve defines a correlation between CQ and P and can be obtained through different techniques of regression analysis, like, for example, aggregating bins of data and interpolating with cubic splines. As before, the found correlation is called "target function" and provides an expected value of CQ for any value of P in the considered range.

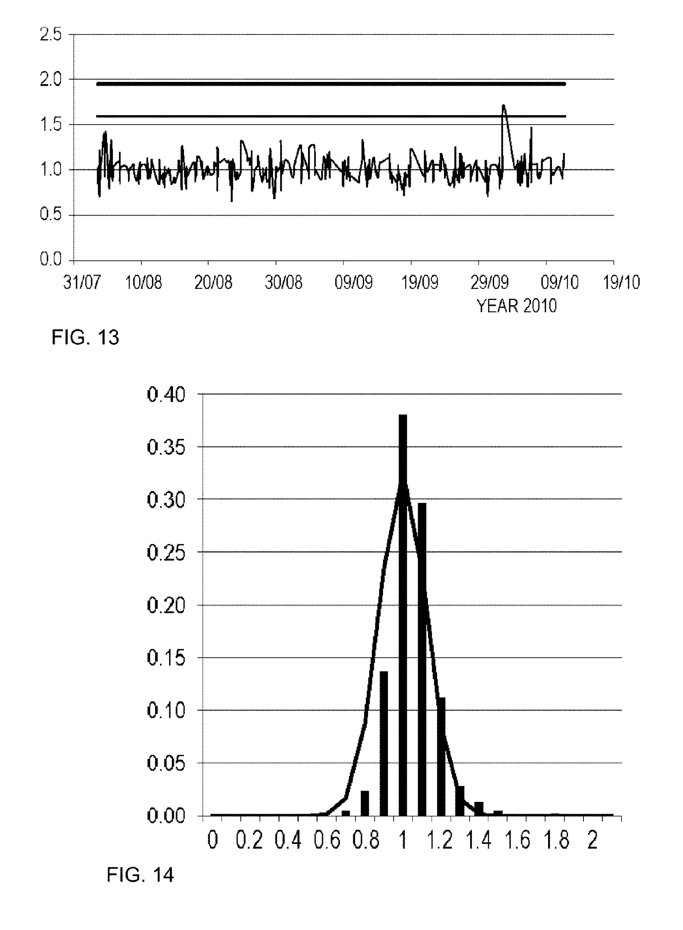

The next step is to normalize the variable CQ by, in this case, taking the quotient between the derived value of CQ and the expected value of CQ, the latter obtained by virtue of the correlation found between CQ and P. That is, to the measured value of CQ corresponds a measured value of P, and from the latter an expected value of CQ is obtained; let's call CQ' said expected value of CQ. Then the normalized value of CQ is CQ/CQ', which can be called CQ". Instead of the quotient, the difference or the relative difference between CQ and CQ' could be taken. This normalization is called "time function" and transforms a time series of CQ into a time series of CQ". The latter is represented in figure 13, in which the abscissa axis is the time and the ordinate axis is CQ".

Figure 14 shows a histogram made from the data of figure 13 and a normal probability distribution that approximates said histogram. The abscissa axis of fig. 14 corresponds to the ordinate axis of fig. 13. It can be seen that the mean value of CQ" in the time series is approximately 1; when computed, the standard deviation turns out to be approximately 0.1, that is, relative to the mean the standard deviation is about a third of what it was in the previously described known procedure.

The lower highlighted horizontal line in fig. 13 is the mean plus five standard deviations, and the higher highlighted horizontal line in fig. 13 is the mean plus eight standard deviations. A first alarm, or warning, can be triggered if, for instance, CQ" is bigger than the mean plus five standard deviations, and a second alarm, or emergency, can be triggered if, for instance, CQ" is bigger than the mean plus eight standard deviations.

This method is more sensitive than the known procedure because the standard deviation is smaller.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

## Claims

1. Method of monitoring the condition of a wind turbine, comprising the steps of:
- selecting a plurality of measurable parameters indicative of the operational state of the wind turbine;
- recording measures of a variable indicative of the condition of the wind turbine during a period of normal operation thereof, and deriving corresponding values of a characteristic quantity from said measures;
- recording measures of the parameters during the same period;
- identifying a correlation between the characteristic quantity and at least one parameter, based on said data;
- from said correlation, defining the expected value of the characteristic quantity as a target function that is a function of said at least one correlated parameter.

2. Method according to claim 1, wherein the recording steps comprise recording a time series of the variable, determining a corresponding time series of the characteristic quantity, and recording a corresponding time series of the parameters, the method further comprising the steps of:
- defining a normalized time series of the characteristic quantity as a time function that is a function of the characteristic quantity as represented by the time series of the characteristic quantity, and is also a function of the target function as applied to the corresponding time series of the at least one correlated parameter;
- defining an alarm function which is a function of said time function.

3. Method according to claim 2, wherein the time function is either the ratio, the difference or the relative difference between the characteristic quantity and the target function.

4. Method according to claim 2 or 3, comprising the step of approximating the time function with a probability distribution.

5. Method according to claim 4, wherein the time function is approximated with a normal probability distribution.

6. Method according to claim 4 or 5, wherein the alarm function is a constant equal to the mean plus the standard deviation of said probability distribution.

7. Method according to any of claims 2 to 6, comprising the steps of:
- measuring the variable and determining the corresponding characteristic quantity;
- measuring the at least one correlated parameter;
- applying the target function to said measure of the at least one correlated parameter to obtain an expected value of the characteristic quantity;
- applying the time function to said characteristic quantity and said expected value thereof;
- applying the alarm function to the previous result of the time function;
- computing the difference between the previous results of the time function and the alarm function;
- triggering a first alarm if said difference is bigger than a first predetermined amount.

8. Method according to claim 7, comprising the step of triggering a second alarm if said difference is bigger than a second predetermined amount.

9. Method according to claim 6 and 7, wherein the first alarm is triggered when said difference is bigger than four standard deviations.

10. Method according to claim 6 and 8, wherein the second alarm is triggered when said difference is bigger than seven standard deviations.

11. Method according to any of the preceding claims, wherein the recording step comprises selecting a range for the rotational speed of the rotor of the wind turbine and performing the measurements within said range.

12. Method according to any of the preceding claims, wherein the monitored variable is any of the amplitude, speed or acceleration of a vibration of an element of the wind turbine.

13. Method according to claim 12, wherein the frequency of said vibration is filtered by a predetermined range of frequencies.

14. Method according to any of the preceding claims, wherein the parameters are selected from the rotational speed of the rotor of the wind turbine, the power output, the rotational speed of the high-speed shaft, the ambient temperature, the wind speed, the atmospheric pressure, the humidity level or the corrosion of the surface of the blades.

15. Method according to any of the preceding claims, wherein the possible correlations are identified by employing a self-learning algorithm.
